# EUROPÄISCHE PATENTSCHRIFT

(11) **EP 1 436 178 B1**
(45) Veröffentlichungstag und Bekanntmachung des Hinweises auf die Patenterteilung: **11.10.2006**
(21) Anmeldenummer: 02752980.9
(22) Anmeldetag: 26.06.2002
(51) Int. Cl.: B60S 1/34, B60S 1/04

(54) **WISCHERANLAGE**
WIPER SYSTEM
SYSTEME D'ESSUIE-GLACE

(30) Priorität: 05.10.2001 DE 10149218
(43) Veröffentlichungstag der Anmeldung: 14.07.2004
(73) Patentinhaber: ROBERT BOSCH GMBH, 70442 Stuttgart (DE)
(72) Erfinder: METZ, Ulrich, 77855 Achern (DE)
(86) Internationale Anmeldenummer: PCT/DE2002/002326
(87) Internationale Veröffentlichungsnummer: WO 2003/035440

(56) Entgegenhaltungen:
- EP-A- 0 382 346
- DE-A- 4 444 066
- US-A- 4 720 885
- US-A- 5 441 227

## Beschreibung

### Stand der Technik

Die Erfindung geht von einer Wischeranlage nach dem Oberbegriff des Anspruchs 1 aus.

Wischeranlagen mit mehreren Scheibenwischern für Kraftfahrzeuge werden mit deren Wischerlagern direkt oder indirekt über eine Platine an der Fahrzeugkarosserie befestigt. Die Platine bzw. eine Rohrplatine - wenn der Wischerträger auch rohrförmige Hohlprofile enthält -, umfasst eine Motorplatine, die einen Wischerantrieb mit einem Wischermotor trägt. Eine Abtriebswelle des Wischermotors treibt über eine Motorkurbel und Gelenkstangen weitere Kurbeln an, die mit einer Antriebswelle für jeden Scheibenwischer fest verbunden sind. Die Antriebswellen sind in Wischerlagern gelagert, deren Lagergehäuse an den Enden der Platine angeordnet sind.

Sind an einem Fahrzeug zwei gleichläufige Scheibenwischer vorgesehen, wird in der Regel der Scheibenwischer auf der Fahrerseite von der Motorkurbel über eine daran angelenkte Gelenkstange und eine weitere Kurbel angetrieben, während der Scheibenwischer auf der Beifahrerseite über ein Viergelenkhebelgetriebe mit einem Viergelenkwischhebel angetrieben wird. Das Viergelenkhebelgetriebe, dessen Kinematik eine kombinierte Hub-Schwenkbewegung des Scheibenwischers bewirkt, passt das Wischfeld des Scheibenwischers der Trapezform der Windschutzscheibe an. Das Viergelenkhebelgetriebe umfasst einen auf einer Antriebsachse sitzenden Antriebshebel und einen Lenker, der schwenkbar um eine Steuerachse gelagert ist. Die freien Enden des Lenkers und des Antriebshebels sind gelenkig mit einem Koppelelement, dem Viergelenkwischhebel, verbunden. Für einige Anwendungsfälle ist der Antriebshebel als Kreuzlenker ausgebildet.

In der Regel sitzt der Lenker bzw. der Antriebshebel fest auf der Steuerachse bzw. der Antriebswelle, die jeweils in einem Lager mit einem Abstand zueinander in einem Gussteil der Platine drehbar gelagert sind. Das Gussteil ist über ein Platinenrohr mit einem Lagergehäuse eines Wischerlagers auf der Beifahrerseite verbunden. In der Regel ist an dem Platinenrohr eine Motorplatine zur Aufnahme eines Wischermotors befestigt (siehe zum Beispiel EP-A-382 346).

Die Scheibenwischer werden entweder von einem umlaufenden oder einem reversierenden Wischermotor angetrieben, wobei sowohl jedem Scheibenwischer ein Wischermotor zugeordnet sein kann, als auch ein Wischermotor mehrere Scheibenwischer gemeinsam antreibt. Aus der DE 199 34 869 A1 ist ein Wischerantrieb mit einem reversierenden Wischermotor bekannt, bei dem die halbkreisförmige Antriebsbewegung der Motorkurbel über ein Koppelgetriebe, zu den Antriebselementen der Scheibenwischer übertragen wird. Zum Antrieb des Scheibenwischers auf der Beifahrerseite ist das Koppelgetriebe über eine Gelenkstange mit dem Kreuzlenker eines Viergelenkhebelgetriebes verbunden, dessen Antriebswelle und Steuerachse in einem Teil der Platine gelagert sind, während über eine weitere Gelenkstange der Scheibenwischer auf der Fahrerseite angetrieben wird. Die Gelenkstangen sind mittels Kugelgelenken mit dem Koppelgetriebe verbunden, deren Kugelzapfen koaxial oder achsparallel angeordnet sind. Der Wischermotor ist zwischen dem Scheibenwischer auf der Fahrerseite und dem Scheibenwischer der Beifahrerseite an der Platine befestigt.

Eine weitere Wischeranlage ist aus der DE 199 40 815 A1 bekannt, bei der an der Motorkurbel eine erste Gelenkstange angelenkt ist, welche über eine Kurbel mit einer ersten Antriebswelle für den Scheibenwischer auf der Fahrerseite verbunden ist. Im Abstand zu dem Gelenk an der Motorkurbel ist an der Gelenkstange ein weiteres Gelenk für eine zweite Gelenkstange vorgesehen. Das freie Ende der zweiten Gelenkstange ist über einen Kreuzlenker triebmäßig mit einer zweiten Antriebswelle für den Scheibenwischer der Beifahrerseite verbunden. Die Anlenkstelle der zweiten Gelenkachse und die Anlenkstelle an der Kurbel haben einen Abstand zueinander, der den Verhältnissen des Einbauraums angepasst werden kann.

### Vorteile der Erfindung

Nach der Erfindung sind der Wischermotor als Reversiermotor auf der Beifahrerseite und seine Motorwelle zwischen der zweiten Antriebswelle und der Steuerachse an dem Gussteil angeordnet. Die Aufnahme für den Wischermotor und die zwei Lagergehäuse für die Antriebswelle und die Steuerachse sind in dem gleichen Gussteil integriert, wodurch eine separate Motorplatine entfallen kann und sich eine insgesamt kompakte Bauweise der Platine ergibt. Ferner ist die Motorwelle des Wischermotors in der Nähe der zweiten Antriebswelle angeordnet. Der geringe Abstand ermöglicht an der Antriebswelle bei günstigen Kraftangriffswinkeln einen großen Abtriebswinkel bzw. Wischwinkel von über 115°, der sonst bei üblichen Koppelvierecken und einem Wischermotor als Rundläufermotor einen aufwändigen Kreuzlenker erfordert. Ferner ergibt sich zwischen der Motorkurbel und einer Lagerschwinge, die mit der zweiten Antriebswelle fest verbunden ist, ein relativ kurzes Antriebselement. Dieses Antriebselement ist als Koppelplatte ausgebildet und ersetzt die sonst übliche lange Gelenkstange, wodurch der Antrieb in diesem Bereich sehr kompakt gestaltet ist. Kompakte Getriebe besitzen gute kinematische Eigenschaften, so dass ein harmonischer Bewegungsablauf entsteht.

Bei einer Wischeranlage mit zwei Wischermotoren wird der andere Scheibenwischer separat von einem weiteren Wischermotor angetrieben, wobei die beiden Wischermotoren nach dem Master-Slave-Prinzip elektrisch miteinander gekoppelt sind. Weist die Wischeranlage nur einen Wischermotor auf, so ist dieser auf der Beifahrerseite angeordnet und treibt gleichzeitig eine erste Antriebswelle eines Scheibenwischers auf der Fahrerseite an. In diesem Fall ist die Motorkurbel über ein erstes Gelenk mit einer Gelenkstange verbunden, die über eine Kurbel die erste Antriebswelle antreibt und über ein zweites Gelenk mit der Koppelplatte verbunden ist, an deren anderem Ende die Lagerschwinge angelenkt ist. Je nach Bauraum oder kinematischen Verhältnissen, können die Gelenke koaxial oder achsparallel angeordnet werden. Ferner können auch beide Gelenke an der Motorkurbel angeordnet sein und einen Abstand zueinander aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: eine erfindungsgemäße Wischeranlage in einer Ansicht von unten in einer Parkstellung,
- Fig. 2: eine Wischeranlage nach Fig.1 in einer Umkehrlage,
- Fig. 3: eine Darstellung der Wischeranlage nach Fig.1 in einer Seitenansicht,
- Fig. 4: eine Variante zu Fig.1 in einer Ansicht von unten,
- Fig. 5: eine Wischeranlage nach Fig.4 in einer Seitenansicht,
- Fig. 6: eine Wischeranlage, bei der jedem Scheibenwischer ein Wischermotor zugeordnet ist und
- Fig. 7: eine Wischeranlage nach Fig. 6 in einer Seitenansicht.

### Beschreibung der Ausführungsbeispiele

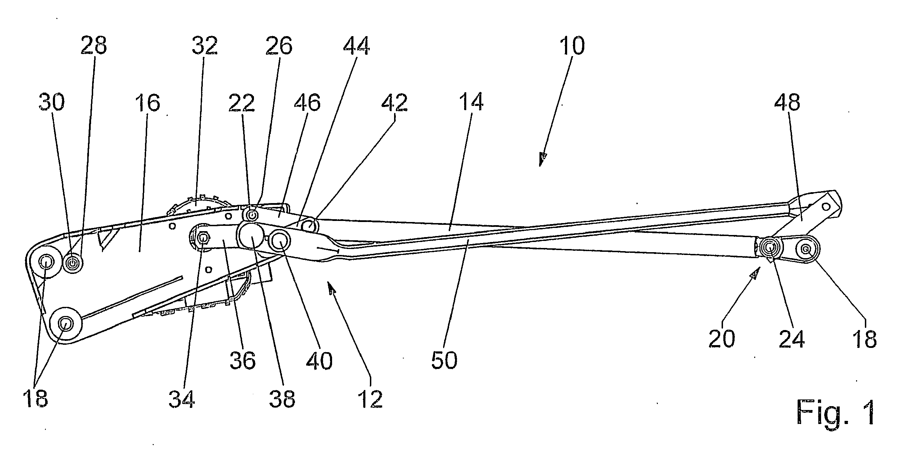

Von einer Wischeranlage 10 für zwei Scheibenwischer sind die für die Erfindung wesentlichen Teile dargestellt. Eine Platine 12 umfasst ein Platinenrohr 14, das an seinem Ende ein Wischerlager 20 für eine erste Antriebswelle 24 trägt und am anderen Ende mit einem Gussteil 16 verbunden ist (Fig. 1). Im Gussteil 16 sind ein erstes Lagergehäuse 22 für eine zweite Antriebswelle 26 und ein zweites Lagergehäuse 28 für eine Steuerachse 30 angeordnet. An der Antriebswelle 26 wird in bekannter Weise ein Antriebshebel eines nicht dargestellten Viergelenkhebelgetriebes befestigt, während auf der Steuerachse 30 ein Lenker sitzt. Über Befestigungsaugen 18 am Wischerlager 20 und am Gussteil 16 ist die Platine 12 an einer nicht dargestellten Fahrzeugkarosserie befestigt.

Ein als Reversiermotor ausgebildeter Wischermotor 32 ist am Gussteil 16 befestigt und zwar so, dass seine Motorwelle 34 zwischen der zweiten Antriebswelle 26 und der Steuerachse 30 angeordnet ist, wobei der Abstand zur Antriebswelle 26 geringer ist als zur Steuerachse 30. Auf der Motorwelle 34 sitzt eine Motorkurbel 36, welche über ein erstes Kugelgelenk 38 mit einer Gelenkstange 50 verbunden ist. Am anderen Ende der Gelenkstange 50 ist eine Kurbel 48 angelenkt, die mit einer ersten Antriebswelle 24 für einen Scheibenwischer der Fahrerseite verbunden ist. Im Bereich des ersten Kugelgelenks 38 weist die Gelenkstange 50 ein zweites Kugelgelenk 40 auf, an dem eine Koppelplatte 44 angelenkt ist. Diese ist an ihrem anderen Ende über ein drittes Kugelgelenk 42 mit einer Lagerschwinge 46 verbunden, welche auf der zweiten Antriebswelle 26 für einen Scheibenwischer der Beifahrerseite sitzt.

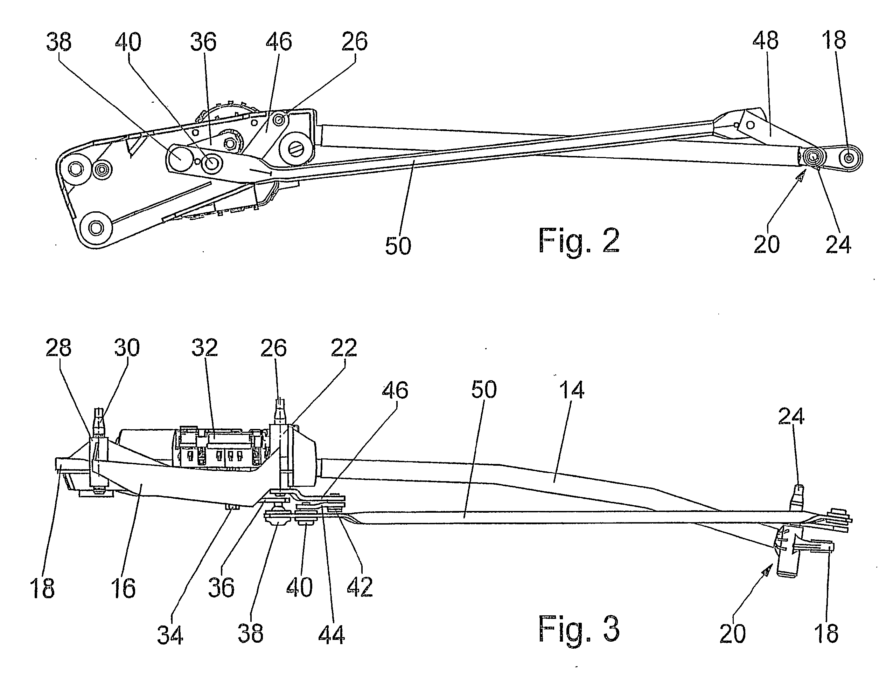

Der Wischermotor 32 ist reversierend und die jeweiligen Umkehrpositionen sind in Fig. 1 und Fig. 2 dargestellt. Beim Vergleich dieser beiden Abbildungen ist zu erkennen, dass ein großer Abtriebswinkel bzw. Wischwinkel an der zweiten Antriebswelle 26 erzeugt wird. Durch diesen großen Abtriebswinkel und ein nachfolgend angeordnetes nicht näher dargestelltes Viergelenkhebelgetriebe wird eine gewünschte Hub-Schwenkbewegung erzeugt, ohne dass zusätzliche Getriebeteile, wie beispielsweise ein Kreuzlenker, erforderlich sind.

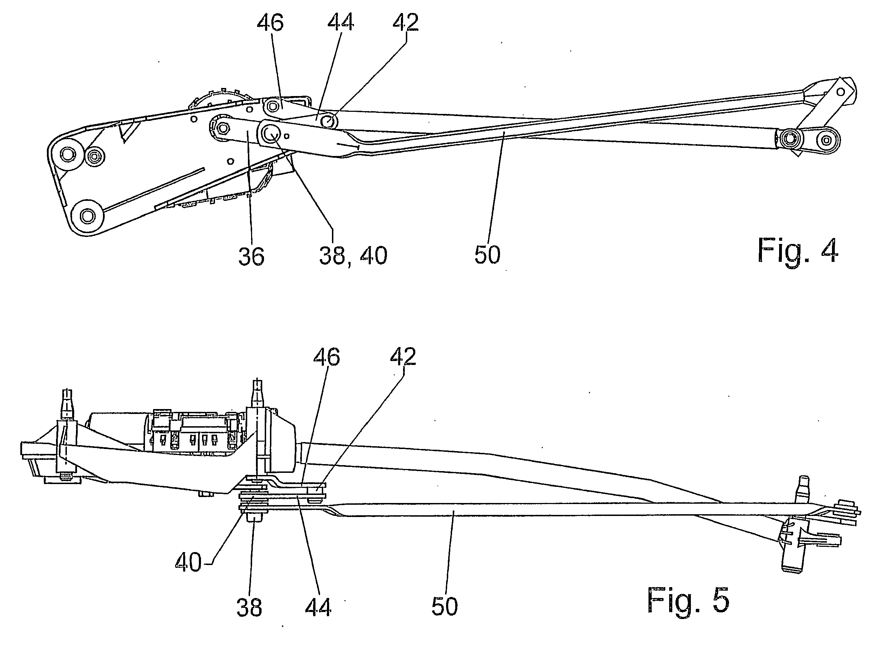

In einer Ausgestaltung der Erfindung sind die Kugelgelenke 38 und 40 achsparallel in einer Ebene an der Gelenkstange 50 angeordnet (Fig. 3). Das Gelenk 42 verbindet die Koppelplatte 44 mit der Lagerschwinge 46 und ist in dieser Figur als Zylindergelenk dargestellt. Bei ebenen Hebelgetrieben ist es auch denkbar, dass zudem das Gelenk 38 oder das Gelenk 40 als Zylindergelenk ausgebildet ist. Um eine andere Bewegungskurve der Gelenkstelle 40 und damit einen veränderten Antriebswinkel zu erzeugen, sind die Gelenke 38 und 40 in einer Ausgestaltung der Erfindung an der Motorkurbel 36 angeordnet, zum Beispiel koaxial (Fig. 4, Fig. 5).

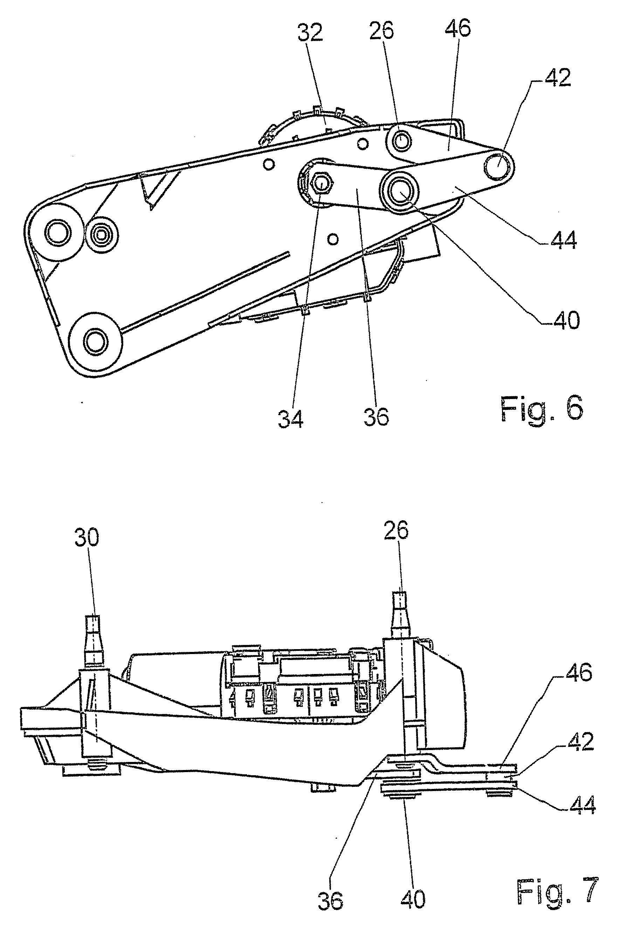

Weist die Wischeranlage 10 zwei Wischermotoren 32 auf, die jeweils einem Scheibenwischer zugeordnet sind, treibt die Motorwelle 34 des einen Wischermotors 32 über die Motorkurbel 36, die Koppelplatte 44 und die Lagerschwinge 46 die zweite Antriebswelle 26 an (Fig. 6, Fig. 7). In diesem Fall ergeben sich große Gestaltungsspielräume für die Wischeranlage 10, insbesondere im Hinblick auf die Kinematik und Anordnung anderer Aggregate.

### Bezugszeichen

- 10: Wischeranlage
- 12: Platine
- 14: Platinenrohr
- 16: Gussteil
- 18: Befestigungsauge
- 20: Wischerlager
- 22: erstes Lagergehäuse
- 24: erste Antriebswelle
- 26: zweite Antriebswelle
- 28: zweites Lagergehäuse
- 30: Steuerachse
- 32: Wischermotor
- 34: Motorwelle
- 36: Motorkurbel
- 38: erstes Kugelgelenk
- 40: zweites Kugelgelenk
- 42: drittes Kugelgelenk
- 44: Koppelplatte
- 46: Lagerschwinge
- 48: Kurbel
- 50: Gelenkstange

## Patentansprüche

1. Wischeranlage (10) mit einer Platine (12), an deren Platinenrohr (14) am einen Ende ein Wischerlager (20) und am anderen Ende ein Gussteil (16) angeordnet ist, in dem ein erstes Lagergehäuse (22) für eine zweite Antriebswelle (26) und ein zweites Lagergehäuse (28) für eine Steuerachse (30) eines Viergelenkhebelgetriebes integriert sind, wobei die zweite Antriebswelle (26) von einem Wischermotor (32) über eine Motorkurbel (36), ein Antriebselement (44) und eine Lagerschwinge (46) angetrieben wird, **dadurch gekennzeichnet, dass** der Wischermotor (32) als Reversiermotor auf der Beifahrerseite und seine Motorwelle (34) zwischen der zweiten Antriebswelle (26) und der Steuerachse (30) in der Nähe der zweiten Antriebswelle (26) an dem Gussteil (16) angeordnet sind und das Antriebselement (44) als Koppelplatte ausgebildet ist.

2. Wischeranlage (10) nach Anspruch 1, **dadurch gekennzeichnet, dass** sie zwei Wischermotoren (32) aufweist, von denen die Motorwelle (34) des einen über die Motorkurbel (36), die Koppelplatte (44) und die Lagerschwinge (46) die zweite Antriebswelle (26) antreibt, während der andere Wischermotor der ersten Antriebswelle (24) zugeordnet ist.

3. Wischeranlage (10) nach Anspruch 1, **dadurch gekennzeichnet, dass** die Motorkurbel (36) über ein erstes Gelenk (38) mit einer Gelenkstange (50) verbunden ist, die über eine Kurbel (48) die erste Antriebswelle (24) antreibt, und über ein zweites Gelenk (40) mit der Koppelplatte (44) verbunden ist.

4. Wischeranlage (10) nach Anspruch 3, **dadurch gekennzeichnet, dass** die Gelenke (38, 40) in einer gemeinsamen Ebene nebeneinander angeordnet sind.

5. Wischeranlage (10) nach Anspruch 3, **dadurch gekennzeichnet, dass** die Gelenke (38, 40) koaxial angeordnet sind.

6. Wischeranlage (10) nach Anspruch 1, **dadurch gekennzeichnet, dass** die Motorkurbel (36) über ein erstes Gelenk (38) mit einer Gelenkstange (50) verbunden ist, die über eine Kurbel (48) eine erste Antriebswelle (24) antreibt und über ein zweites Gelenk (40) mit der Koppelplatte (44) verbunden ist.

7. Wischeranlage (10) nach einem der Ansprüche 3 bis 6, **dadurch gekennzeichnet, dass** mindestens ein Gelenk (38, 40) als Kugelgelenk und die übrigen als Zylindergelenke ausgebildet sind.

## Claims

1. Wiper system (10) with a mounting plate (12), on the mounting-plate tube (14) of which a wiper bearing (20) is arranged at the one end and, at the other end, a cast part (16) is arranged, in which a first bearing housing (22) for a second drive shaft (26) and a second bearing housing (28) for a control spindle (30) of a four-bar-lever mechanism are integrated, the second drive shaft (26) being driven by a wiper motor (32) via a motor crank (36), a drive element (44) and a bearing rocker (46), **characterized in that** the wiper motor (32) is arranged as a reversing motor on the passenger's side and its motor shaft (34) is arranged between the second drive shaft (26) and the control spindle (30) on the cast part (16) in the vicinity of the second drive shaft (26), and the drive element (44) is designed as a coupling plate.

2. Wiper system (10) according to Claim 1, **characterized in that** it has two wiper motors (32) of which the motor shaft (34) of the one wiper motor uses the motor crank (36), the coupling plate (44) and the bearing rocker (46) to drive the second drive shaft (26) while the other wiper motor is assigned to the first drive shaft (24).

3. Wiper system (10) according to Claim 1, **characterized in that** the motor crank (36) is connected via a first joint (38) to an articulated rod (50), which uses a crank (48) to drive the first drive shaft (24), and is connected via a second joint (40) to the coupling plate (44).

4. Wiper system (10) according to Claim 3, **characterized in that** the joints (38, 40) are arranged in a common plane next to each other.

5. Wiper system (10) according to Claim 3, **characterized in that** the joints (38, 40) are arranged coaxially.

6. Wiper system (10) according to Claim 1, **characterized in that** the motor crank (36) is connected via a first joint (38) to an articulated rod (50), which uses a crank (48) to drive a first drive shaft (24), and is connected via a second joint (40) to the coupling plate (44).

7. Wiper system (10) according to one of Claims 3 to 6, **characterized in that** at least one joint (38, 40) is designed as a ball-and-socket joint and the remaining joints are designed as cylinder joints.

## Revendications

1. Installation d'essuie-glace (10) comprenant une platine (12) munie d'un tube de platine (14) dont une extrémité porte un palier d'essuie-glace (12) et l'autre une pièce en fonte (16) intégrant un premier boîtier de palier (22) pour un second arbre d'entraînement (26) et un second boîtier de palier (28) pour un axe de commande (30) d'une transmission à quadrangle articulé,
le second arbre d'entraînement (26) étant entraîné par un moteur d'essuie-glace (32) par l'intermédiaire d'une manivelle (36), d'un élément d'entraînement (44) et d'une bielle (46),
**caractérisée en ce que**
le moteur d'essuie-glace (32) est un moteur réversible installé du côté du passager et son arbre de sortie (34) est prévu entre le second arbre d'entraînement (26) et l'axe de commande (30) à proximité du second arbre d'entraînement (26) sur la pièce en fonte (16) et l'élément d'entraînement (44) est une plaque de couplage.

2. Installation d'essuie-glace (10) selon la revendication 1,
**caractérisée en ce qu'**
elle comporte deux moteurs d'essuie-glace (32) parmi lesquels, l'arbre (34) de l'un des moteurs entraîne le second arbre d'entraînement (26) par l'intermédiaire de la manivelle (36), de la plaque de couplage (44) et de la bielle de palier (46) alors que l'autre moteur d'essuie-glace est associé au premier arbre d'entraînement (24).

3. Installation d'essuie-glace (10) selon la revendication 1,
**caractérisée en ce que**
la manivelle (36) est reliée à une tige d'articulation (50) par une première articulation (38), cette tige entraînant le premier arbre (24) par l'intermédiaire d'une manivelle (48) et une seconde articulation (40) est reliée à la plaque de couplage (44).

4. Installation d'essuie-glace (10) selon la revendication 3,
**caractérisée en ce que**
les articulations (38, 40) sont juxtaposées dans un plan commun.

5. Installation d'essuie-glace (10) selon la revendication 3,
**caractérisée en ce que**
les articulations (38, 40) sont coaxiales.

6. Installation d'essuie-glace (10) selon la revendication 1,
**caractérisée en ce que**
la manivelle (36) est reliée par une première articulation (38) à une tige d'articulation (50) entraînant le premier arbre (24) par une manivelle (48) et elle est reliée par une seconde articulation (40) à la plaque de couplage (44).

7. Installation d'essuie-glace (10) selon l'une des revendications 3 à 6,
**caractérisée en ce qu'**
au moins une articulation (38, 40) est une articulation à rotule et les autres sont des articulations à cylindre.
